(19)

**Europäisches Patentamt**
**European Patent Office**
**Office européen des brevets**

(11) **EP 4 550 229 A1**

(12) **EUROPEAN PATENT APPLICATION**

(43) Date of publication:
07.05.2025 Bulletin 2025/19

(21) Application number: 24199112.4

(22) Date of filing: 09.09.2024

(51) International Patent Classification (IPC):
**G06Q 10/04** (2023.01)  **G06Q 10/0631** (2023.01)

(52) Cooperative Patent Classification (CPC):
**G06Q 10/04; G06Q 10/06315; G06Q 50/06**

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 01.11.2023 IN 202321074469

(71) Applicant: Tata Consultancy Services Limited
Maharashtra (IN)

(72) Inventors:
• JACOB, IRENE
411013 Pune, Maharashtra (IN)

• MENON, VISHNU PADMAKUMAR
411013 Pune, Maharashtra (IN)
• BICHPURIYA, YOGESH KUMAR
411013 Pune, Maharashtra (IN)
• SARANGAN, VENKATESH
600113 Chennai, Tamil Nadu (IN)
• JAYARAMAN, VINODHKANNA
600113 Chennai, Tamil Nadu (IN)
• FERNANDO, SAVARIRAJAN ANTONY JEGAN
600096 Chennai, Tamil Nadu (IN)
• RAJAGOPAL, NARAYANAN
560066 Bangalore, Karnataka (IN)

(74) Representative: Goddar, Heinz J.
Boehmert & Boehmert
Anwaltspartnerschaft mbB
Pettenkoferstrasse 22
80336 München (DE)

(54) **METHOD AND SYSTEM FOR OPTIMAL SCHEDULING OF POWER SOURCES FOR MEETING ELECTRICITY DEMAND OF ENTERPRISE**

(57) The uncertainty of availability and risk associated with the cost of power procurement hinders the consumer from using new sources of supply/storage devices or taking part in the competitive power markets or procuring power from green energy resources. Present disclosure provides a method and a system for optimal scheduling of power sources for meeting electricity demand of enterprise. In particular, the system performs portfolio optimization formulation for cost, risk and carbon emission minimization for the enterprise. The portfolio optimization formulation simulates market scenario and guides in providing effective power purchase strategy for enterprise along with real-time adjustments. In particular, the level of risk to be considered along with cost of power procurement and carbon footprint determine portfolio allocation for each time block in portfolio optimization formulation. Thus, enterprise may choose most appropriate terms of contract, best installation size of renewable resources or batteries, and supply sources.

FIG. 3

**EP 4 550 229 A1**

**Description**

CROSS-REFERENCE TO RELATED APPLICATIONS AND PRIORITY

The present application claims priority to Indian application no. Indian Patent Application No. 202321074469, filed on November 1, 2023.

TECHNICAL FIELD

The disclosure herein generally relates to portfolio optimization, and, more particularly, to a method and a system for optimal scheduling of power sources for meeting electricity demand of an enterprise.

BACKGROUND

The electricity sector has been deregulated to enhance the overall efficiency of the sector by bringing in competition in the power industry. The consumers are basically encouraged to minimize their cost of procurement, and the renewable sources of electricity supply are given priority in order to reduce carbon emissions to the environment.
Although there is option to procure power from the competitive market or green but risky resources, the consumers are more inclined to avoid risk and establish contracts with generators or avail electricity from retailers. The consumers show such behavior because of the uncertainty in the availability of green energy and the fluctuating market cost. Thus, the uncertainty of availability and risk associated with cost of power procurement hinders the consumer from taking part in the competitive power markets which can drastically reduce the power procurement cost or procuring it from green energy resources which may ensure reduced carbon emission.

SUMMARY

Embodiments of the present disclosure present technological improvements as solutions to one or more of the above-mentioned technical problems recognized by the inventors in conventional systems. For example, in one aspect, there is provided a method for optimal scheduling of power sources for meeting electricity demand of an enterprise. The method comprises receiving, by a system via one or more hardware processors, a plurality of inputs associated with a plurality of power sources from a source system, wherein the source system is associated with an enterprise, wherein the plurality of inputs comprise one or more of: one or more parameters associated with each of an additional power source available with the enterprise and a battery, one or more solar parameters, one or more forecasted parameters, a plurality of historic power data, an electricity board power contract price, and an energy market power price, and wherein the plurality of historic power data comprises a historical market price data, a historical demand data and a historical solar data; calculating, by the system via the one or more hardware processors, a variance of each of a market price, a demand and a solar generation based on the historical market price data, the historical demand data and the historical solar data, respectively, using a variance calculation method; modelling, by the system via the one or more hardware processors, a first set of constraints based on the plurality of inputs, wherein the first set of constraints comprise a solar generation constraint, a state of charge constraint, a battery capacity constraint, a generation load-balance constraint, and a maximum demand constraint; modelling, by the system via the one or more hardware processors, a first objective function with minimization of a cost, a carbon emission and a weighted market price risk as a quadratic function based on the calculated variance of each of the market price, the demand, and the solar generation; creating, by the system via the one or more hardware processors, a primary optimization model based on the modelled first set of constraints and the modelled first objective function; and solving, by the system via the one or more hardware processors, the primary optimization model to obtain a scheduled power allocation of the plurality of power sources using a quadratic programming technique, wherein the scheduled power allocation ensures reduced risk, cost and carbon emission.
In an embodiment, the method further comprises: receiving, by the system via the one or more hardware processors, a real-time power data from the source system, wherein the real-time power data comprises a real-time power generation data, a real-time solar data and a real-time demand data; determining, by the system via the one or more hardware processors, whether there is any difference between the real-time power data and the one or more forecasted parameters; and performing, by the system via the one or more hardware processors, a real-time scheduling of the battery charging and discharging to minimize the difference between the real-time power data and the one or more forecasted parameters upon determining that the real-time power data is different from the one or more forecasted parameters, wherein the minimization of the difference is referred as modelling of a second objective function to be used in a secondary optimization model.
In an embodiment, the method further comprises: modeling, by the system via the one or more hardware processors, a second set of constraints based on the plurality of inputs, wherein the second set of constraints comprises a real-time contract constraint, a real-time solar generation constraint, a real-time state of charge constraint, a real-time battery capacity constraint, and a real-time demand balance constraint; creating, by the system via the one or more hardware processors, a secondary optimization model based on the modelled second set of constraints and the modelled second objective function; and solving, by the system via the one or more hardware processors, the secondary optimization model to obtain a real-time charging and discharging to be performed on the battery using a mixed-integer linear programming technique.

In another aspect, there is provided a system for optimal scheduling of power sources for meeting electricity demand of an enterprise. The system comprises a memory storing instructions; one or more communication interfaces; and one or more hardware processors coupled to the memory via the one or more communication interfaces, wherein the one or more hardware processors are configured by the instructions to: receive a plurality of inputs associated with a plurality of power sources from a source system, wherein the source system is associated with an enterprise, wherein the plurality of inputs comprise one or more of: one or more parameters associated with each of an additional power source available with the enterprise and a battery, one or more solar parameters, one or more forecasted parameters, a plurality of historic power data, an electricity board power contract price, and an energy market power price, and wherein the plurality of historic power data comprises a historical market price data, a historical demand data and a historical solar data; calculate a variance of each of a market price, a demand and a solar generation based on the historical market price data, the historical demand data and the historical solar data, respectively, using a variance calculation method; model a first set of constraints based on the plurality of inputs, wherein the first set of constraints comprise a solar generation constraint, a state of charge constraint, a battery capacity constraint, a generation load-balance constraint, and a maximum demand constraint; model a first objective function with minimization of a cost, a carbon emission and a weighted market price risk as a quadratic function based on the calculated variance of each of the market price, the demand, and the solar generation; create a primary optimization model based on the modelled first set of constraints and the modelled first objective function; and solve the primary optimization model to obtain a scheduled power allocation of the plurality of power sources using a quadratic programming technique, wherein the scheduled power allocation ensures reduced risk, cost and carbon emission.

In yet another aspect, there are provided one or more non-transitory machine-readable information storage mediums comprising one or more instructions which when executed by one or more hardware processors perform optimal scheduling of power sources for meeting electricity demand of an enterprise by receiving, by a system via one or more hardware processors, a plurality of inputs associated with a plurality of power sources from a source system, wherein the source system is associated with an enterprise, wherein the plurality of inputs comprise one or more of: one or more parameters associated with each of an additional power source available with the enterprise and a battery, one or more solar parameters, one or more forecasted parameters, a plurality of historic power data, an electricity board power contract price, and an energy market power price, and wherein the plurality of historic power data comprises a historical market price data, a historical demand data and a historical solar data; calculating, by the system via the one or more hardware processors, a variance of each of a market price, a demand and a solar generation based on the historical market price data, the historical demand data and the historical solar data, respectively, using a variance calculation method; modelling, by the system via the one or more hardware processors, a first set of constraints based on the plurality of inputs, wherein the first set of constraints comprise a solar generation constraint, a state of charge constraint, a battery capacity constraint, a generation load-balance constraint, and a maximum demand constraint; modelling, by the system via the one or more hardware processors, a first objective function with minimization of a cost, a carbon emission and a weighted market price risk as a quadratic function based on the calculated variance of each of the market price, the demand, and the solar generation; creating, by the system via the one or more hardware processors, a primary optimization model based on the modelled first set of constraints and the modelled first objective function; and solving, by the system via the one or more hardware processors, the primary optimization model to obtain a scheduled power allocation of the plurality of power sources using a quadratic programming technique, wherein the scheduled power allocation ensures reduced risk, cost and carbon emission.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an example representation of an environment, related to at least some example embodiments of the present disclosure.
FIG. 2 illustrates an exemplary block diagram of a system for optimal scheduling of power sources for meeting electricity demand of an enterprise, in accordance with an embodiment of the present disclosure.

FIG. 3 illustrates a schematic block diagram representation of a portfolio optimization formulation process performed by the system for optimal scheduling of power sources, in accordance with an embodiment of the present disclosure. FIGS. 4A and 4B, collectively, illustrate an exemplary flow diagram of a method for optimal scheduling of power sources for meeting electricity demand of an enterprise, in accordance with an embodiment of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In the real world power procurement scenario, the consumer may wish to identify the benefits of introducing new sources of supply or storage devices or may like to vary the existing power purchase strategy or the terms of contract to reduce the overall cost of power procurement and to reduce the carbon emission. However, the uncertainty of availability and risk associated with the cost of power procurement hinders the consumer from using new sources of supply/storage devices or taking part in the competitive power markets or procuring power from green energy resources.

Few of the available techniques tried to perform long/short term portfolio optimization. However, they require multi-year data for analysis and the prediction is also done for multiple year which leads to reduction in accuracy as the power requirements keep on changing on day to day basis. Further, the available techniques have not utilized the available renewable energy sources and battery storage for mitigating power associated risk.

So, portfolio optimization technique that can simulate the market scenario and help in deciding effective power procurement strategy for the enterprise is still to be explored.

Embodiments of the present disclosure overcome the above-mentioned disadvantages by providing a method and a system for optimal scheduling of power sources for meeting electricity demand of an enterprise. In particular, the system performs portfolio optimization formulation for cost, risk and carbon emission minimization for the enterprise. The portfolio optimization formulation simulates market scenario and guides in providing effective power purchase strategy for the enterprise i.e., how much power the enterprise need to procure from various sources other than markets and contracts in order to reduce the overall cost and the carbon emission while taking into consideration a plurality of constraints associated with the sources and carbon emission factors.

In the present disclosure, the system and the method performs day-ahead portfolio optimization formulation for minimization of cost, carbon emission and overall risk associated with green energy power sources while considering use of a battery, thus providing effective purchase strategy for the enterprise while reducing the overall time spent on deciding the strategy. Further, the results of the day-ahead portfolio optimization formulation is further used in the real-time adjustment formulation to devise the adjustments that can be made in battery allocation and contract allocation, thereby further minimizing real-time costs, risks, and carbon emissions due to deviation in actual data. Additionally, the effective purchase strategy provided by the system enhances the utilization of green energy to meet the real-time demand effectively while simultaneously avoiding the risk and minimizing costs and carbon emissions.

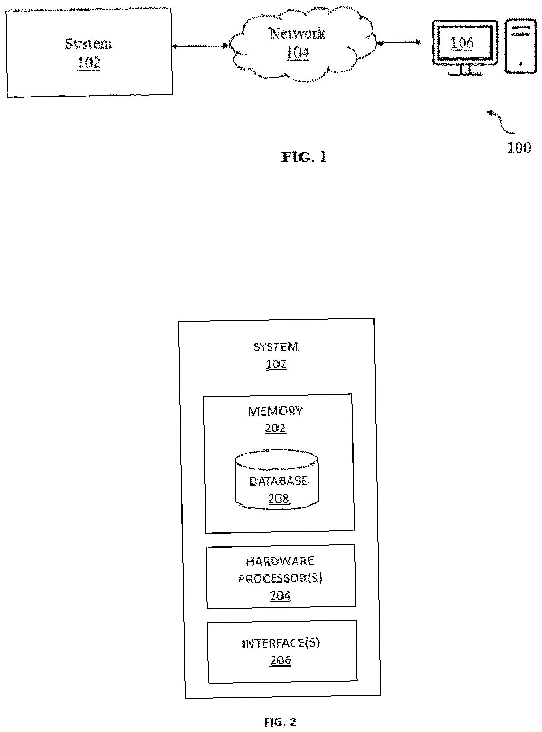

Referring now to the drawings, and more particularly to FIGS. 1 through 4B, where similar reference characters denote corresponding features consistently throughout the figures, there are shown preferred embodiments and these embodiments are described in the context of the following exemplary system and/or method.

The notations used for describing FIGS. 1 through 4B are mentioned below.

| Subscript ($i$) | |
|---|---|
| $c$ | Contract |
| $m$ | Market |
| $s_i$ | Solar internal |
| $s_e$ | Solar external |
| $b_c$ | Battery charging |
| $b_d$ | Battery discharging |
| $sk$ | excess available solar generation |
| Superscript | |
| $*$ | Converged optimal value of variable after optimization |

(continued)

| Subscript (i) | |
|---|---|
| $T$ | Transpose of matrix |
| Script | |
| $t$ | time block |
| $S(t)$ | Portfolio allocation vector |
| $C(t)$ | Cost vector |
| $cef(t)$ | CEF vector |
| $\hat{P}_i(t)$ | Forecasted data |
| $fl_{pv}$ | Binary flag variable for solar external throttling |
| $fl_d$ | Binary flag variable for maximum demand charges optimization to be considered |
| $SOC(t)$ | State of Charge of battery in PO |
| $soc(t)$ | State of Charge of battery in real-time optimization |
| $SOC^{min}/SOC^{max}$ | Maximum and minimum SOC limits of battery |
| $B^{max}$ | Maximum rate of charging and discharging power of battery |
| $D^{max}$ | Maximum demand variable |
| $C_{demand}$ | Demand charges for each block |
| $w_1, w_2$ | Weightage parameters in multi-objective function |
| $K$ | The vector of aversion factors |
| $Q(t)$ | Vector of co-variance matrices |
| $B$ | Total number of time-blocks in a day |
| $P$ | Varied S matrix |
| $O$ | Null matrix |
| $D(.)$ | Diagonal matrix of |
| $\delta$ | Real-time variable denoting adjustment in allocations |
| $k, k_p,$ and $k_{ds}$ | the risk aversion coefficients |
| $q(t), q_p(t)$ and $q_{ds}(t)$ | Co-variance matrices |
| $s_i, s_e$ | Actual solar generation availability |
| $z(t)$ | binary variable that ensures that the battery either charges or discharges at the given time block |
| $x$ | Objective function for real-time |
| $y$ | actual generation-demand gap |
| $\Delta$ | real-time supply adjustment |

FIG. 1 illustrates an exemplary representation of an environment 100 related to at least some example embodiments of the present disclosure. Although the environment 100 is presented in one arrangement, other embodiments may include the parts of the environment 100 (or other parts) arranged otherwise depending on, for example, calculating variance in allocation of power procurement, modelling constraints, creating optimization model, etc. The environment 100 generally includes a system 102, a source system 106 (hereinafter also referred as a user device 106), each coupled to, and in communication with (and/or with access to) a network 104. It should be noted that one source system is shown for the sake of explanation; there can be more number of source systems.

The network 104 may include, without limitation, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, a virtual network, and/or another suitable public and/or private network capable of supporting communication among two or more of the parts or users illustrated in FIG. 1, or any combination thereof.

Various entities in the environment 100 may connect to the network 104 in accordance with various wired and wireless communication protocols, such as Transmission Control Protocol and Internet Protocol (TCP/IP), User Datagram Protocol (UDP), 2nd Generation (2G), 3rd Generation (3G), 4th Generation (4G), 5th Generation (5G) communication protocols, Long Term Evolution (LTE) communication protocols, or any combination thereof.

The source system 106 is associated with an enterprise/organization who is looking for a power purchase strategy to be followed for reducing cost, risk and carbon emission associated with competitive power markets and green energy resources. Examples of the source system 106 include, but are not limited to, a personal computer (PC), a mobile phone, a tablet device, a Personal Digital Assistant (PDA), a server, a voice activated assistant, a smartphone, and a laptop.

The system 102 includes one or more hardware processors and a memory. The system 102 is first configured to receive a plurality of inputs associated with a plurality of power sources via the network 104 from the source system 106. The plurality of inputs comprise one or more of one or more parameters associated with each of an additional power source available with the enterprise and a battery, one or more solar parameters, one or more forecasted parameters, a plurality of historic power data, an electricity board power contract price, and an energy market power price. The plurality of historic power data comprises a historical market price data, a historical demand data and a historical solar data.

The system 102 then calculates variance of each of a market price, a demand and a solar generation based on the historical market price data, the historical demand data and the historical solar data, respectively, using a variance calculation method. Thereafter, the system 102 models a first set of constraints based on the plurality of inputs and a first objective function with minimization of a cost, a carbon emission and a weighted market price risk as a quadratic function based on the calculated variance. Further, the system 102 uses the modeled first set of constraints and the modeled first objective function to create a primary optimization model which is then solved using a quadratic programming technique to obtain a scheduled power allocation of the plurality of power sources. The scheduled power allocation ensures reduced risk, cost and carbon emission.

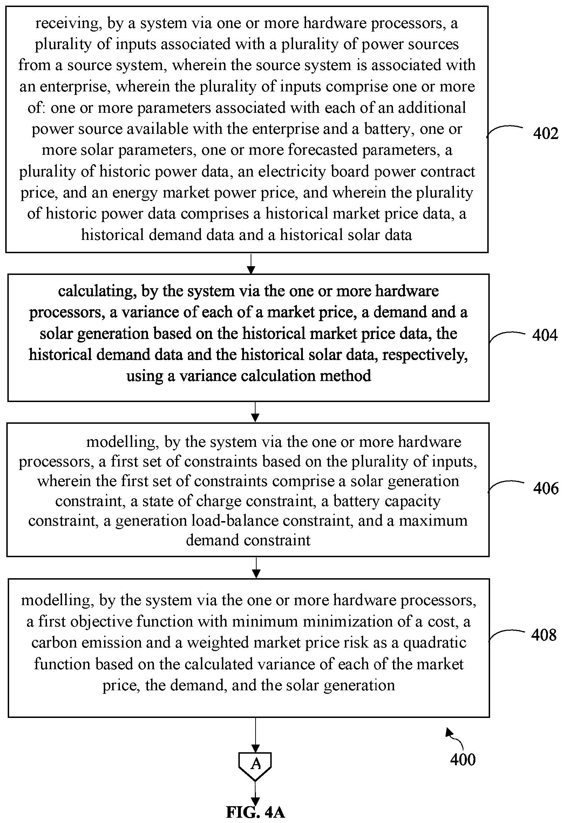

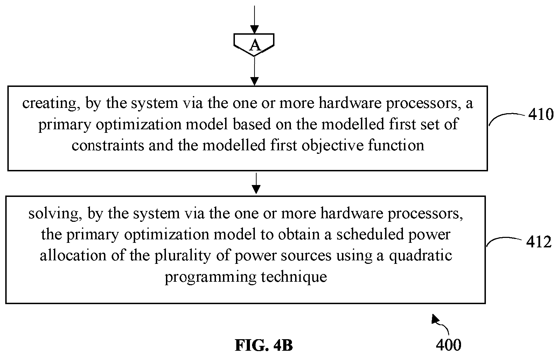

The process of creation of the optimization model is explained in detail with reference to FIGS. 4A and 4B.

The number and arrangement of systems, devices, and/or networks shown in FIG. 1 are provided as an example. There may be additional systems, devices, and/or networks; fewer systems, devices, and/or networks; different systems, devices, and/or networks; and/or differently arranged systems, devices, and/or networks than those shown in FIG. 1. Furthermore, two or more systems or devices shown in FIG. 1 may be implemented within a single system or device, or a single system or device shown in FIG. 1 may be implemented as multiple, distributed systems or devices. Additionally, or alternatively, a set of systems (e.g., one or more systems) or a set of devices (e.g., one or more devices) of the environment 100 may perform one or more functions described as being performed by another set of systems or another set of devices of the environment 100 (e.g., refer scenarios described above).

FIG. 2 illustrates an exemplary block diagram of the system 102 for optimal scheduling of power sources for meeting electricity demand of an enterprise, in accordance with an embodiment of the present disclosure. In some embodiments, the system 102 is embodied as a cloud-based and/or SaaS-based (software as a service) architecture. In some embodiments, the system 102 may be implemented in a server system. In some embodiments, the system 102 may be implemented in a variety of computing systems, such as laptop computers, notebooks, hand-held devices, workstations, mainframe computers, and the like.

In an embodiment, the system 102 includes one or more processors 204, communication interface device(s) or input/output (I/O) interface(s) 206, and one or more data storage devices or memory 202 operatively coupled to the one or more processors 204. The one or more processors 204 may be one or more software processing modules and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 102 can be implemented in a variety of computing systems, such as laptop computers, notebooks, hand-held devices, workstations, mainframe computers, servers, a network cloud and the like.

The I/O interface device(s) 206 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 202 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment a database 208 can be stored in the memory 202, wherein the database 208 may comprise, but are not limited to, a variance calculation method, a quadratic programming technique, a linear programming technique, one or more processes and the like. The memory 202 further comprises (or may further comprise) information pertaining to input(s)/output(s) of each step performed by the systems and methods of the present disclosure. In other words, input(s) fed at each step and output(s) generated at each step are comprised in the memory 202 and can be utilized in further processing and analysis.

It is noted that the system 102 as illustrated and hereinafter described is merely illustrative of an apparatus that could benefit from embodiments of the present disclosure and, therefore, should not be taken to limit the scope of the present disclosure. It is noted that the system 102 may include fewer or more components than those depicted in FIG. 2.

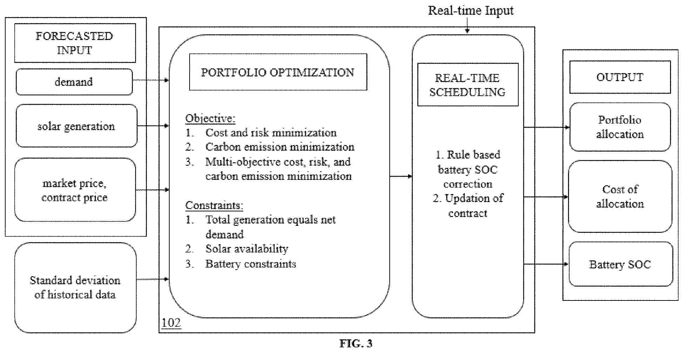

FIG. 3 illustrates a schematic block diagram representation of a portfolio optimization formulation process performed by the system 102 for optimal scheduling of power sources, in accordance with an embodiment of the present disclosure.

As seen in FIG. 3, the system 102 first receives the plurality of inputs. The plurality of inputs are related to demand, solar generation, energy market price, electricity power board contract price, forecasted inputs and the like. The system 102 then performs portfolio optimization formulation (also referred as a first objective function) with objective of cost, risk and carbon emission minimization using the plurality of inputs while taking into consideration the plurality of constraints, such as solar constraints, battery constraints, generation load-balance constraint and the like. Thereafter, the system 102 receives real-time inputs, such as real-time power data which is then compared with the forecasted inputs for taking into consideration risk of forecasted errors for the forecasted inputs.

Further, upon determining that the real-time power data is different from the forecasted inputs, the system 102 performs a real-time scheduling of the battery charging and discharging to minimize the difference between the real-time power data and the forecasted inputs. Finally, the system 102 provides the outputs, such as portfolio allocation that refers to scheduled power allocation of the plurality of power sources, cost of allocation and a battery state of charge (SOC) to be maintained.

FIGS. 4A and 4B, collectively, with reference to FIGS. 1 to 3, represent an exemplary flow diagram of a method 400 for optimal scheduling of power sources for meeting electricity demand of the enterprise, in accordance with an embodiment of the present disclosure. The method 400 may use the system 102 of FIGS. 1 and 2 for execution. In an embodiment, the system 102 comprises one or more data storage devices or the memory 208 operatively coupled to the one or more hardware processors 206 and is configured to store instructions for execution of steps of the method 400 by the one or more hardware processors 206. The sequence of steps of the flow diagram may not be necessarily executed in the same order as they are presented. Further, one or more steps may be grouped together and performed in form of a single step, or one step may have several sub-steps that may be performed in parallel or in sequential manner. The steps of the method of the present disclosure will now be explained with reference to the components of the system 102 as depicted in FIG. 2 and FIG. 1.

At step 402 of the present disclosure, the one or more hardware processors 206 of the system 102 receive a plurality of inputs associated with a plurality of power sources from the source system 106. The plurality of power sources comprise a battery $p_{b_c}(t)$ and $p_{b_d}(t)$, an additional power source available with the enterprise, a local electricity distribution board or a retailer as a contract $p_c(t)$, an energy market $p_m(t)$, a third party solar generation (also referred as solar external) $p_{se}(t)$, a solar generator (also referred as solar internal) $p_{si}(t)$ installed in the enterprise etc.

In an embodiment, the plurality of inputs comprise one or more of one or more parameters associated with each of the additional power source available with the enterprise and the battery, one or more solar parameters, one or more forecasted parameters, a plurality of historic power data, an electricity board power contract price, and an energy market power price.

In at least one example embodiment, the one or more solar parameters comprise parameters associated with solar generator installed in the enterprise or the third party solar generation or both. In at least one example embodiment, the plurality of historic power data comprises a historical market price data, a historical demand data of the enterprise and a historical solar data i.e., the historical data associated with availability of the solar power.

In at least one example embodiment, the one or more forecasted parameters comprise a forecasted demand data $\hat{D}(t)$, a forecasted market price data and a forecasted solar data that includes both the forecasted solar internal $\hat{P}_{si}(t)$ and external data $\hat{P}_{se}(t)$.

At step 404 of the present disclosure, the one or more hardware processors 206 of the system 102 calculate a variance of each of a market price, a demand and a solar generation based on the historical market price data, the historical demand data and the historical solar data, respectively, using a variance calculation method. In particular, the variance of the market price is calculated based on the historical market price data using the variance calculation method. Similarly, the variance of the demand is calculated based on the historical demand data and the variance of the solar generation is calculated based on the historical solar data using the variance calculation method. It should be noted that any existing variance calculation method can be used for calculating variance. In an exemplary scenario, the risk of market prices can be quantified by a covariance matrix of the prices and can be represented as:

$$V(t) = E\big[\boldsymbol{p}(t) - E[\boldsymbol{p}(t)]\big](\boldsymbol{p}(t) - E[\boldsymbol{p}(t)])^T,$$

Where, $E[.\,]$ represents expected value of the variable.

At step 406 of the present disclosure, the one or more hardware processors 206 of the system 102 model a first set of constraints based on the plurality of inputs. The first set of constraints comprise a solar generation constraint, a state of charge constraint, a battery capacity constraint, a generation load-balance constraint, and a maximum demand constraint. The above step can be better understood by way of the following description.

In an embodiment, the solar external is either forced an allocation of its entire generation to ensure maximum utilization of the green resources or constrained to allocate within its generated capacity in every time block. So, the system 102 models the solar constraint such that it limits solar generation based on the solar availability from external solar source. In particular, the solar generation constraint is modeled in such a way that it ensures that the solar allocation is within/equal to the available solar generation at each time block. So,

$$p_{s_e}(t) = \hat{P}_{s_e}(t) fl_{pv}, \forall t, \text{ and } p_{s_e}(t) \leq \hat{P}_{s_e}(t)(1 - fl_{pv}), \forall t,$$

Where,

In an embodiment, a state of charge of the battery at time t is a sum of the state of charge at a previous time interval and the net energy flowing into the battery i.e., the difference of amount of energy charging into and the amount of energy discharging from the battery. So, the state of charge constraint is modelled by the system 102 to ensure that the battery SOC is maintained within limits:

$$p_{b_c}(t) - p_{b_d}(t) = SOC(t) - SOC(t - 1), \forall t$$

$$SOC^{min} \leq SOC(t) \leq SOC^{max}, \forall t,$$

Where, an initial charge of the battery is set to a value as:

$$SOC(0) = SOC^{init}$$

In an embodiment, the battery capacity constraint is considered to ensure that the battery charging and discharging should not exceed the power capacity of the battery. So, the system 102 model the battery capacity constraint such that the charging and discharging occurable in any time block is set within a threshold of the power capacity of the battery. So, the battery capacity constraint modelled by the system 102 as:

$$p_{b_d}(t) \leq B^{max}, \forall t, \; p_{b_c}(t) \leq B^{max}, \forall t$$

In an embodiment, the generation load-balance constraint is considered to ensure that the power allocated from the plurality of sources are totally equal to the demand at each time block. So, the system 102 model the generation load-balance constraint to stipulate that the net demand is satisfied by the net generation from the plurality of sources as:

$$p_m(t) + p_c(t) + p_{s_e}(t) - p_{b_c}(t) + p_{b_d}(t) - p_{sk}(t) = \hat{D}(t) - \hat{P}_{s_i}(t), \forall t$$

In an embodiment, the maximum demand constraint is considered to calculate the maximum net power requirement of the enterprise for that day. So, the system 102 model the maximum demand constraint as maximum of the difference of demand and sum of internal solar generation and difference of discharging and charging of the battery which is represented as:

$$D^{max} \geq (\hat{D}(t) - \hat{P}_{s_i}(t) + p_{b_c}(t) - p_{b_d}(t)) \times fl_d, \forall t$$

It should be noted that the maximum demand constraint may be made visible only when binary flag variable $fl_d$ is set to 1. The optimization without the constraint implies that the demand charges are set to fixed values specified in the retailer/contract bill. So, the fixed demand charge for each month is added to the total monthly market price obtained from the optimization.

At step 408 of the present disclosure, the one or more hardware processors 206 of the system 102 model a first objective function with minimization of a cost, a carbon emission and a weighted market price risk as a quadratic function based on the calculated variance of each of the market price, the demand, and the solar generation. The first objective function is represented as:

$$min \; w_1 \; \sum_{t=1}^{B} \; (C^T(t)S(t) \; + \; KD(P(t))Q(t)P(t) \; + \; C_{demand} \; \times \; D^{max}) \; +$$

$$w_2 \sum_{t=1}^{B}(cef^T(t)S(t)),$$

Where, $P(t) = [[S(t)]_{3\times 1}]$, $K = [\left[\frac{1}{2}k\right]_{1\times 6} \; [k_p(1-r)]_{1\times 6} \; [k_{ds}]_{1\times 6}]$ and $Q(t) = \begin{bmatrix} q(t) & O & O \\ O & q_p(t) & O \\ O & O & q_{ds}(t) \end{bmatrix}$, $q(t)$, $q_p(t)$ and $q_{ds}(t)$ are covariance matrices associated with the market price, historical price forecasting errors and the forecasting errors of the difference of historical demand and unpredictable generation sources for a particular time block $t$, and

$r$ is the Pearson's coefficient of correlation between $q_p(t)$ and $q_{ds}(t)$.

At step 410 of the present disclosure, the one or more hardware processors 206 of the system 102 create a primary optimization model based on the modelled set of constraints and the modelled objective function.

At step 412 of the present disclosure, the one or more hardware processors 206 of the system 102 solve the primary optimization model to obtain a scheduled power allocation of the plurality of power sources using a quadratic programming technique. The quadratic programming technique/optimization involves objective function with quadratic terms and linear constraints.

In particular, the primary optimization model is solved using the modelled set of constraints and the modelled objective function with the given input data to get the required allocations from the plurality of sources in operation stage. In an embodiment, the scheduled power allocation comprises information about the amount of power to be procured from each source of the plurality of sources at each time block such that the risk associated with usage of green resources, the total power procurement cost and the carbon emission is reduced.

In at least one example embodiment, the system 102 receives a real-time power data from the source system 106. In an embodiment, the real-time power data is output from a day-ahead formulation. The real-time power data comprises a real-time power generation data, a real-time solar data and a real-time demand data. Then, the system 102 determines whether there is any difference between the real-time power data and the one or more forecasted parameters. Thereafter, upon determining that the real-time power data is different from the one or more forecasted parameters, the system 102 performs a real-time scheduling of the battery charging and discharging to minimize the difference between the real-time power data and the one or more forecasted parameters. In particular, a secondary optimization model is modelled at this step for minimization of the real-time allocations with real-time adjustments in the day-ahead allocations and actual demand and solar availability. The secondary optimization model is represented as:

$$min \; x(t)$$

Where, $x(t) = |a_1 \; \delta_c(t)| + |a_2 \delta_{S_i}(t)| + |a_3 \; \delta_{s_e}(t)| + |a_4 \; \delta_{b_c}(t)| + |a_5 \; \delta_{b_d}(t)|$

Further, the system 102 models a second set of constraints based on the plurality of inputs. The second set of constraints comprises a real-time contract constraint, a real-time solar generation constraint, a real-time state of charge constraint, a real-time battery capacity constraint, and a real-time demand balance constraint.

In an embodiment, the real-time contract constraint ensures that the real-time contract is non-negative as the negative allocation to contract purchase is considered as considered as invalid. So, the system models the real-time contract constraint as:

$$p_c^*(t) \; + \; \delta_c(t) \; \geq \; 0$$

In an embodiment, the real-time solar generation should be non-negative and within the available generation limit. So, the system 102 models the real-time solar generation constraint to ensure that the solar generation should be within the available generation limit as:

$$p_{s_i}^*(t) + \delta_{s_i}(t) \leq s_i(t), \qquad p_{s_e}^*(t) + \delta_{s_e}(t) \leq s_e(t)$$

$$p_{s_i}^*(t) + \delta_{s_i}(t) \geq 0, \; p_{s_e}^*(t) + \delta_{s_e}(t) \geq 0$$

In an embodiment, the real-time state of charge constraint ensures that the current SOC should be the sum of SOC of previous time step and the difference of real-time charging and discharging. So, the system models the real-time state of charge as:

$$soc(t) = soc(0) + p_{b_c}^*(t) + \delta_{b_c}(t) - p_{b_d}^*(t) - \delta_{b_d}(t)$$

It should be noted that the real-time SOC should be within the minimum and maximum SOC limits. So,

$$SOC^{min} \leq soc(t) \leq SOC^{max}$$

In an embodiment, the real-time battery capacity constraint is ensures that the real-time battery allocation should be non-negative and within the maximum limit of charging and discharging rate. So, the system 102 models the real-time battery capacity constraint as:

$$p_{b_c}^*(t) + \delta_{b_c}(t), p_{b_d}^*(t) + \delta_{b_d}(t) \geq 0,$$

$$p_{b_c}^*(t) + \delta_{b_c}(t) \leq B^{max} z(t), p_{b_d}^*(t) + \delta_{b_d}(t) \leq B^{max}(1 - z(t)),$$

Where, $z(t)$ is a binary variable that ensures that the battery either charges or discharges at the given time block.

In an embodiment, the real-time demand balance constraint ensures that the real-time power allocation from the plurality of sources should totally meet the demand balance condition. So, the system 102 models the real-time demand balance constraint as:

$$y(t) - \Delta(t) = 0$$

Where, $y(t) = d(t) - s_i(t) - s_e(t) - p_m^*(t) - p_c^*(t) + p_{b_c}^*(t) - p_{b_d}^*(t)$, $\Delta(t) = \delta_c(t) + \delta_{s_i}(t) + \delta_{s_e}(t) - \delta_{b_c}(t) + \delta_{b_d}(t)$

Once the second set of constraints are modelled, the system 102 creates a secondary optimization model based on the modelled second set of constraints and the modelled second objective function. The secondary optimization model is represented as:

$$min \; x(t)$$

Where,

$$x(t) = |a_1 \delta_c(t)| + |a_2 \delta_{s_i}(t)| + |a_3 \delta_{s_e}(t)| + |a_4 \delta_{b_c}(t)| + |a_5 \delta_{b_d}(t)|$$

Finally, the system 102 solves the secondary optimization model to obtain a real-time charging and discharging to be performed on the battery using a mixed-integer linear programming technique. In particular, the battery SOC to be maintained at each time step is obtained after solving the secondary optimization model. It should be noted that, without limiting the scope of the invention, any mixed-integer linear programming technique available in the art can be used for the same purpose.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

As discussed earlier, existing techniques tried to perform long and short term portfolio optimization. However, they require multi-year data for analysis and the prediction is also done for multiple year which leads to reduction in accuracy as the power requirements keep on changing on day to day basis. So, to overcome the disadvantages, embodiments of the present disclosure provide a method and a system for optimal scheduling of power sources for meeting electricity demand of the enterprise. More specifically, the system and the method performs day-ahead portfolio optimization formulation for minimization of cost, carbon emission and overall risk associated with green energy power sources while considering use of a battery, thus providing effective purchase strategy for the enterprise while reducing the overall time spent on deciding the strategy. Further, the results of the day-ahead portfolio optimization formulation is further used in the real-time adjustment formulation to devise the adjustments that can be made in battery allocation and contract allocation, thereby further minimizing real-time costs, risks, and carbon emissions due to deviation in actual data. Additionally, the effective purchase strategy enhances the utilization of the green energy to meet the real-time demand effectively while simultaneously avoiding the risk and minimizing the costs and the carbon emissions.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (400), comprising:
   receiving (402), by a system via one or more hardware processors, a plurality of inputs associated with a plurality of power sources from a source system, wherein the source system is associated with an enterprise, wherein the plurality of inputs comprise one or more of: one or more parameters associated with each of an additional power source available with the enterprise and a battery, one or more solar parameters, one or more forecasted parameters, a plurality of historic power data, an electricity board power contract price, and an energy market power price, and wherein the plurality of historic power data comprises a historical market price data, a historical demand data and a historical solar data;

calculating (404), by the system via the one or more hardware processors, a variance of each of a market price, a demand and a solar generation based on the historical market price data, the historical demand data and the historical solar data, respectively, using a variance calculation method;

modelling (406), by the system via the one or more hardware processors, a first set of constraints based on the plurality of inputs, wherein the first set of constraints comprise a solar generation constraint, a state of charge constraint, a battery capacity constraint, a generation load-balance constraint, and a maximum demand constraint;

modelling (408), by the system via the one or more hardware processors, a first objective function with minimization of a cost, a carbon emission and a weighted market price risk as a quadratic function based on the calculated variance of each of the market price, the demand, and the solar generation;

creating (410), by the system via the one or more hardware processors, a primary optimization model based on the modelled first set of constraints and the modelled first objective function; and

solving (412), by the system via the one or more hardware processors, the primary optimization model to obtain a scheduled power allocation of the plurality of power sources using a quadratic programming technique, wherein the scheduled power allocation ensures reduced risk, cost and carbon emission.

2. The processor implemented method (400) as claimed in claim 1, comprising:

receiving, by the system via the one or more hardware processors, a real-time power data from the source system, wherein the real-time power data comprises a real-time power generation data, a real-time solar data and a real-time demand data;

determining, by the system via the one or more hardware processors, whether there is any difference between the real-time power data and the one or more forecasted parameters; and

performing, by the system via the one or more hardware processors, a real-time scheduling of the battery charging and discharging to minimize the difference between the real-time power data and the one or more forecasted parameters upon determining that the real-time power data is different from the one or more forecasted parameters, wherein the minimization of the difference is referred as modelling of a second objective function to be used in a secondary optimization model.

3. The processor implemented method (400) as claimed in claim 2, comprising:

modeling, by the system via the one or more hardware processors, a second set of constraints based on the plurality of inputs, wherein the second set of constraints comprises a real-time contract constraint, a real-time solar generation constraint, a real-time state of charge constraint, a real-time battery capacity constraint, and a real-time demand balance constraint;

creating, by the system via the one or more hardware processors, the secondary optimization model based on the modelled second set of constraints and the modelled second objective function; and

solving, by the system via the one or more hardware processors, the secondary optimization model to obtain a real-time charging and discharging to be performed on the battery using a mixed-integer linear programming technique.

4. A system (102), comprising:

a memory (202) storing instructions;
one or more communication interfaces (206); and
one or more hardware processors (204) coupled to the memory (202) via the one or more communication interfaces (206), wherein the one or more hardware processors (204) are configured by the instructions to:

receive a plurality of inputs associated with a plurality of power sources from a source system, wherein the source system is associated with an enterprise, wherein the plurality of inputs comprise one or more of: one or more parameters associated with each of an additional power source available with the enterprise and a battery, one or more solar parameters, one or more forecasted parameters, a plurality of historic power data, an electricity board power contract price, and an energy market power price, and wherein the plurality of historic power data comprises a historical market price data, a historical demand data and a historical solar data;

calculate a variance of each of a market price, a demand and a solar generation based on the historical market price data, the historical demand data and the historical solar data, respectively, using a variance calculation method;

model a first set of constraints based on the plurality of inputs, wherein the first set of constraints comprise a solar generation constraint, a state of charge constraint, a battery capacity constraint, a generation load-balance constraint, and a maximum demand constraint;

model a first objective function with minimization of a cost, a carbon emission and a weighted market price risk as a quadratic function based on the calculated variance of each of the market price, the demand, and the solar generation;

create a primary optimization model based on the modelled first set of constraints and the modelled first objective function; and

solve the primary optimization model to obtain a scheduled power allocation of the plurality of power sources using a quadratic programming technique, wherein the scheduled power allocation ensures reduced risk, cost and carbon emission.

5. The system (102) as claimed in claim 4, wherein the one or more hardware processors (204) are configured by the instructions to:

receive a real-time power data from the source system, wherein the real-time power data comprises a real-time power generation data, a real-time solar data and a real-time demand data;

determine whether there is any difference between the real-time power data and the one or more forecasted parameters; and

perform real-time scheduling of the battery charging and discharging to minimize the difference between the real-time power data and the one or more forecasted parameters upon determining that the real-time power data is different from the one or more forecasted parameters, wherein the minimization of the difference is referred as modelling of a second objective function to be used in a secondary optimization model.

6. The system (102) as claimed in claim 5, wherein the one or more hardware processors (204) are configured by the instructions to:

model a second set of constraints based on the plurality of inputs, wherein the second set of constraints comprises a real-time contract constraint, a real-time solar generation constraint, a real-time state of charge constraint, a real-time battery capacity constraint, and a real-time demand balance constraint;

create the secondary optimization model based on the modelled second set of constraints and the modelled second objective function; and

solve the secondary optimization model to obtain a real-time charging and discharging to be performed on the battery using a mixed-integer linear programming technique.

7. One or more non-transitory machine-readable information storage mediums comprising one or more instructions which when executed by one or more hardware processors cause:

receiving, a plurality of inputs associated with a plurality of power sources from a source system, wherein the source system is associated with an enterprise, wherein the plurality of inputs comprise one or more of: one or more parameters associated with each of an additional power source available with the enterprise and a battery, one or more solar parameters, one or more forecasted parameters, a plurality of historic power data, an electricity board power contract price, and an energy market power price, and wherein the plurality of historic power data comprises a historical market price data, a historical demand data and a historical solar data;

calculating, a variance of each of a market price, a demand and a solar generation based on the historical market price data, the historical demand data and the historical solar data, respectively, using a variance calculation method;

modelling, a first set of constraints based on the plurality of inputs, wherein the first set of constraints comprise a solar generation constraint, a state of charge constraint, a battery capacity constraint, a generation load-balance constraint, and a maximum demand constraint;

modelling, a first objective function with minimization of a cost, a carbon emission and a weighted market price risk as a quadratic function based on the calculated variance of each of the market price, the demand, and the solar generation;

creating, a primary optimization model based on the modelled first set of constraints and the modelled first objective function; and

solving, the primary optimization model to obtain a scheduled power allocation of the plurality of power sources using a quadratic programming technique, wherein the scheduled power allocation ensures reduced risk, cost and carbon emission

8. The one or more non-transitory machine-readable information storage mediums as claimed in claim 7, comprising:

receiving, a real-time power data from the source system, wherein the real-time power data comprises a real-time power generation data, a real-time solar data and a real-time demand data;

determining, whether there is any difference between the real-time power data and the one or more forecasted parameters; and

performing, a real-time scheduling of the battery charging and discharging to minimize the difference between the real-time power data and the one or more forecasted parameters upon determining that the real-time power data is different from the one or more forecasted parameters, wherein the minimization of the difference is referred as modelling of a second objective function to be used in a secondary optimization model.

9. The one or more non-transitory machine-readable information storage mediums as claimed in claim 8, comprising:

modeling, a second set of constraints based on the plurality of inputs, wherein the second set of constraints comprises a real-time contract constraint, a real-time solar generation constraint, a real-time state of charge constraint, a real-time battery capacity constraint, and a real-time demand balance constraint;

creating, the secondary optimization model based on the modelled second set of constraints and the modelled second objective function; and

solving, the secondary optimization model to obtain a real-time charging and discharging to be performed on the battery using a mixed-integer linear programming technique.

System
102

Network
104

106

100

**FIG. 1**

SYSTEM
102

MEMORY
202

DATABASE
208

HARDWARE
PROCESSOR(S)
204

INTERFACE(S)
206

FIG. 2

**FORECASTED INPUT**

demand

solar generation

market price, contract price

Standard deviation of historical data

Real-time Input

**PORTFOLIO OPTIMIZATION**

Objective:
1. Cost and risk minimization
2. Carbon emission minimization
3. Multi-objective cost, risk, and carbon emission minimization

Constraints:
1. Total generation equals net demand
2. Solar availability
3. Battery constraints

102

**REAL-TIME SCHEDULING**

1. Rule based battery SOC correction
2. Updation of contract

**OUTPUT**

Portfolio allocation

Cost of allocation

Battery SOC

FIG. 3

16

receiving, by a system via one or more hardware processors, a plurality of inputs associated with a plurality of power sources from a source system, wherein the source system is associated with an enterprise, wherein the plurality of inputs comprise one or more of: one or more parameters associated with each of an additional power source available with the enterprise and a battery, one or more solar parameters, one or more forecasted parameters, a plurality of historic power data, an electricity board power contract price, and an energy market power price, and wherein the plurality of historic power data comprises a historical market price data, a historical demand data and a historical solar data — 402

calculating, by the system via the one or more hardware processors, a variance of each of a market price, a demand and a solar generation based on the historical market price data, the historical demand data and the historical solar data, respectively, using a variance calculation method — 404

modelling, by the system via the one or more hardware processors, a first set of constraints based on the plurality of inputs, wherein the first set of constraints comprise a solar generation constraint, a state of charge constraint, a battery capacity constraint, a generation load-balance constraint, and a maximum demand constraint — 406

modelling, by the system via the one or more hardware processors, a first objective function with minimum minimization of a cost, a carbon emission and a weighted market price risk as a quadratic function based on the calculated variance of each of the market price, the demand, and the solar generation — 408

A

400

**FIG. 4A**

A

creating, by the system via the one or more hardware processors, a primary optimization model based on the modelled first set of constraints and the modelled first objective function ⌐ 410

solving, by the system via the one or more hardware processors, the primary optimization model to obtain a scheduled power allocation of the plurality of power sources using a quadratic programming technique ⌐ 412

**FIG. 4B**                                    400

Europäisches
Patentamt

European
Patent Office

Office européen
des brevets

# EUROPEAN SEARCH REPORT

**Application Number**

EP 24 19 9112

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/059098 A1 (DONG BING [US] ET AL) 20 February 2020 (2020-02-20) | 1,2,4,5, 7,8 | INV. G06Q10/04 |
| Y | * paragraph [0002] - paragraph [0003] * * paragraph [0032] * * paragraph [0034] * * paragraph [0037] * * paragraph [0039] * * paragraph [0041] * * paragraph [0051] * * figures 2, 9 * | 3,6,9 | G06Q10/0631 |
| Y | MIRAKHORLI AMIN ET AL: "Model predictive control for building loads connected with a residential distribution grid", APPLIED ENERGY, ELSEVIER SCIENCE PUBLISHERS, GB, vol. 230, 6 September 2018 (2018-09-06), pages 627-642, XP085493737, ISSN: 0306-2619, DOI: 10.1016/J.APENERGY.2018.08.051 | 3,6,9 | |
| A | * abstract * * page 627, column 2 * * page 631, column 1 * * page 633, column 1 * * page 634, column 1 - column 2 * * page 638, column 1 * * figure 1 * * tables 1, 2 * | 1,2,4,5, 7,8 | TECHNICAL FIELDS SEARCHED (IPC) G06Q |

The present search report has been drawn up for all claims

| Place of search | Date of completion of the search | Examiner |
|---|---|---|
| Munich | 30 January 2025 | Bharucha, Zubin |

EPO FORM 1503 03.82 (P04C01)

**ANNEX TO THE EUROPEAN SEARCH REPORT
ON EUROPEAN PATENT APPLICATION NO.**

EP 24 19 9112

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2025

| Patent document cited in search report | Publication date | Patent family member(s) | Publication date |
|---|---|---|---|
| US 2020059098 A1 | 20-02-2020 | US 2020059098 A1<br>WO 2018156700 A1 | 20-02-2020<br>30-08-2018 |

For more details about this annex : see Official Journal of the European Patent Office, No. 12/82

**REFERENCES CITED IN THE DESCRIPTION**

**Patent documents cited in the description**

- IN 202321074469